# EUROPÄISCHE PATENTSCHRIFT

(11) **EP 4 291 354 B1**
(45) Veröffentlichungstag und Bekanntmachung des Hinweises auf die Patenterteilung: **20.11.2024**
(21) Anmeldenummer: 22701376.0
(22) Anmeldetag: 24.01.2022
(51) Int. Cl.: B25B 1/10, B23Q 1/00, B23Q 3/06, B23Q 7/04, B23Q 7/14, B25J 15/00, B25J 15/04

(54) **SPANNEINRICHTUNG**
CLAMPING DEVICE
DISPOSITIF DE SERRAGE

(30) Priorität: 10.02.2021 DE 102021103114
(43) Veröffentlichungstag der Anmeldung: 20.12.2023
(73) Patentinhaber: Gressel AG, 8355 Aadorf (CH)
(72) Erfinder: SCHLÜSSEL, Marcel, 8303 Bassersdorf (CH)
(74) Vertreter: Charrier Rapp & Liebau
(86) Internationale Anmeldenummer: PCT/EP2022/051437
(87) Internationale Veröffentlichungsnummer: WO 2022/171418

(56) Entgegenhaltungen:
- DE-A1- 102018 106 210
- DE-A1- 102018 128 883
- DE-B3- 102012 014 617

## Beschreibung

Die Erfindung betrifft eine Spanneinrichtung nach dem Oberbegriff der Anspruchs 1.

Eine derartige Spanneinrichtung nach dem Oberbegriff von Anspruch 1 ist aus der DE 10 2018 128 883 A1 bekannt. Diese weist ein durch ein Arbeitsmedium betätigbares Nullpunkt-Spannsystem, einem mit dem Nullpunkt-Spannsystem über eine Palette koppelbaren Maschinenschraubstock und eine als Palettengreifer ausgebildete Greif- und Positioniereinrichtung zum Transport und zur Positionierung der mit dem Maschinenschraubstock bestückten Palette an dem Nullpunkt-Spannsystem auf. Um das Nullpunkt-Spannsystem über den Palettengreifer mit dem Arbeitsmedium versorgen zu können, ist in dem Palettengreifer eine Andockeinheit integriert, die an ein Spannsystem für die Palette andocken kann. Das Nullpunkt-Spannsystem enthält mehrere in einer Platte integrierte Nullpunkt-Spanneinrichtungen, die jeweils eine Aufnahmeöffnung für die Aufnahme eines von der Unterseite der Palette vorstehenden Spannzapfens aufweisen. An einer Seitenwand der Platte sind mehrere nebeneinander angeordnete Kupplungselemente zur Kopplung mit dazugehörigen Andockelementen in der am Palettengreifer angeordneten Andockeinheit vorgesehen. Über die Kupplungselemente kann dem Nullpunkt-Spannsystem ein Arbeitsmedium zur Betätigung der Nullpunkt-Spanneinrichtungen zugeführt werden. Die Kupplungselemente sind an der Seitenwand der Palette derart angeordnet, dass deren Längsachsen rechtwinklig zu den Längsachsen der Aufnahmeöffnungen für die Spanzapfen ausgerichtet sind. Über den Palettengreifer kann die Palette mit dem darauf angeordneten Maschinenschraubstock auf der Platte des Nullpunk-Spannsystems abgesetzt werden. Um die am Palettengreifer angeordnete Andockeinheit mit den an dem Nullpunkt-Spannsystem angeordneten Kupplungselementen zu koppeln, muss die Andockeinheit zunächst gegenüber dem Plattengreifer abgesenkt werden, um die Andockelemente in der Andockeinheit gegenüber den Kupplungselementen im Nullpunkt-Spannsystem vertikal auszurichten. Nach dieser vertikalen Ausrichtung muss dann die Andockeinheit in einem nächsten Schritt horizontal ausgefahren werden, um die Andockeinheit mit der Platte des Nullpunkt-Spannsystems zu verriegeln und die Andockelemente mit den Kupplungselementen zu verbinden. Hierfür sind entsprechende Linearführungen und gesonderte Antriebe erforderlich.

Aufgabe der Erfindung ist es, eine Spanneinrichtung der eingangs genannten Art zu schaffen, die eine Ankopplung einer Andockeinheit zur Versorgung des Nullpunkt-Spannsystems mit einem Arbeitsmedium auch ohne gesonderte Antriebe an der Andockeinheit ermöglicht.

Diese Aufgabe wird durch eine Spanneinrichtung mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Spanneinrichtung weist das Nullpunkt-Spannsystem mindestens ein Kupplungselement und die Greif- und Positioniereinrichtung eine Andockeinrichtung mit mindestens einem mit dem Kupplungselement koppelbaren Andockelement für die Zuführung des Arbeitsmediums zum Nullpunkt-Spannsystem auf. Das mindestens eine Kupplungselement am Nullpunkt-Spannsystem ist parallel versetzt zu einer Aufnahmeöffnung für ein am Maschinenschraubstock angeordnetes Spannelement und das mindestens eine Andockelement ist derart angeordnet, dass es mit dem Kupplungselement durch eine Einfahrbewegung des am Maschinenschraubstock angeordneten Spannelements in die Aufnahmeöffnung gekoppelt wird. Ein wesentlicher Vorteil der erfindungsgemäßen Spanneinrichtung besteht darin, dass die Kopplung der für die Zuführung eines Arbeitsmediums vorgesehenen Kupplungselemente auch ohne zusätzliche Antriebe und aufwändige Kupplungsbewegungen alleine durch die von der Greif- und Positioniereinrichtung initiierte Ankopplung des Maschinenschraubstocks an das Nullpunkt-Spannsystem erfolgt.

In einer besonders bevorzugten Ausführung sind die miteinander koppelbaren Kupplungs- und Andockelemente als Fluid-Übertragungselemente zur Übertragung von Druckluft oder Hydraulikfluid als Arbeitsmedium ausgeführt. Das Kupplungselement enthält zweckmäßigerweise eine Durchgangsöffnung, deren Längsachse parallel zu einer Längsachse der Aufnahmeöffnung für das Spannelement verläuft. In der Durchgangsöffnung des Kupplungselements kann ein durch eine Druckfeder in eine Schließstellung beaufschlagtes Sperrelement angeordnet sein. Die miteinander koppelbaren Kupplungs- und Andockelemente können als Fluid-Übertragungselemente und/oder als elektrische Verbinder zur Übertragung von elektrischer Energie oder elektrischen Signalen ausgebildet sein. Die elektrischen Verbinder können auch als Verbindungselemente zur kontaktlosen Übertragung ausgebildet sein.

Das mindestens eine Andockelement kann einen in einer Aufnahmeöffnung der Andockeinheit axial verschiebbaren und mit einer Durchgangsöffnung versehenen Druckstößel umfassen. Der Druckstößel ist derart angeordnet, dass seine Durchgangsöffnung mit der Durchgangsöffnung des dazugehörigen Kupplungselements fluchtet, wenn die Greif- und Positioniereinrichtung eine Andockposition zum Andocken des Maschinenschraubstocks an das Nullpunkt-Spannsystem einnimmt. Der Druckstößel kann durch eine Druckfeder nach außen gedrückt werden und weist zweckmäßigerweise an seinem dem Kupplungselement zugewandten äußeren Ende ein zentrales Druckteil zum Öffnen des im Anschlussteil angeordneten Sperrelements und einen Durchgang für die Durchleitung der Druckluft von dem Andockelement zu dem Kupplungselement auf. Das Sperrelement kann ein innerhalb des Kupplungselements verschiebbar geführter und durch eine Druckfeder in eine Schließstellung beaufschlagter Sperrstift sein.

Um die Abkopplung zu erleichtern, weist der Druckstößel zweckmäßigerweise eine durch das Arbeitsmedium beaufschlagbare erste Druckfläche zur Bewegung des Druckstößels in eine zurückgezogene Stellung auf. Dadurch kann die Greif- und Positioniereinrichtung zum Entkoppeln unter einem Winkel von 90° zur Mittelachse des Nullpunk-Spannsystems weggefahren werden. In einer weiteren vorteilhaften Weise kann der Druckstößel als Differenzdruckstößel ausgebildet sein, der neben der durch das Arbeitsmedium beaufschlagbaren ersten Druckfläche zur Bewegung des Druckstößels in eine zurückgezogene Stellung eine durch das Arbeitsmedium beaufschlagbare zweite Druckfläche zur Beaufschlagung des Druckstößels in eine ausgefahrene Stellung enthält. Dadurch kann der Druckstößel durch das Arbeitsmedium gegen das Kupplungselement gedrückt und auch zurückgezogen werden. In der Andockeinheit sind zweckmäßigerweise mehrere Schaltventile zur Steuerung der Druckluftzufuhr angeordnet. In dem Nullpunkt-Spannsystem mit einem federvorgespannten Schließmechanismus kann ein Selbsthaltungsventil zur Halterung des Nullpunkt-Spannsystems in einer Öffnungsstellung angeordnet sein.

In einer besonders vorteilhaften Ausgestaltung sind an dem Nullpunkt-Spannsystem mehrere Reihen von nebeneinander angeordneten ersten Kupplungselementen und an der Greif- und Positioniereinrichtung mehrere nebeneinander angeordnete Andockelemente zur Kopplung mit den korrespondierenden Kupplungselementen jeweils einer Reihe angeordnet. Dadurch können auch Maschinenschraubstöcke mit unterschiedlichen Längen ohne aufwändige Verstellmechanismen mit einem Arbeitsmedium versorgt werden. Die Kupplungselemente können in einem auf die unterschiedlichen Maschinenschraubstöcke abgestimmten Raster mit vorgegebenen Teilungen und Abständen angeordnet sein. Dieses Raster kann an die jeweiligen Abmessungen und Anforderungen angepasst werden.

Die Greif- und Positioniereinrichtung kann in einer weiteren vorteilhaften Ausführung neben einer Kopplungseinrichtung zur lösbaren Verbindung mit einer Spannvorrichtung und zur festen Halterung der Spannvorrichtung während eines Transports einen integrierten Antrieb zur Bewegung der Spannvorrichtung zwischen einer Spann- und Lösestellung aufweisen. Eine solche Greif- und Positioniereinrichtung kann eine Spannvorrichtung somit nicht nur zwischen unterschiedlichen Positionen, z.B. zwischen einer Ablage und einer Bearbeitungsposition innerhalb einer Werkzeugmaschine vor und zurück, transportieren, sondern kann die Spannvorrichtung in den unterschiedlichen Positionen auch zur Bewegung zwischen einer Spann- und Lösestellung betätigen. Durch die Greif- und Positioniereinrichtung wird somit ermöglicht, dass eine klassische Spannvorrichtung nicht nur zur Halterung eines Werkstücks während einer Bearbeitung, sondern auch als Greifeinrichtung für den Transport und die Handhabung von Werkstücken verwendet werden kann. Dies führt zu einem vereinfachten Beladeprozess und kürzeren Rüst- und Stillstandzeiten. Umspann- und Umrüstvorgänge können auch außerhalb des Maschinenraums stattfinden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Spanneinrichtung mit einem Nullpunkt-Spannsystem, einem Maschinenschraubstock und einer Greif- und Positioniereinrichtung in einer Perspektivansicht;
- **Figur 2**: die in Figur 1 gezeigte Spanneinrichtung in einer Seitenansicht;
- **Figur 3**: die in Figur 1 gezeigte Spanneinrichtung in einer vergrößerten Perspektivansicht;
- **Figur 4**: eine Detailansicht der in Figur 1 gezeigten Spanneinrichtung;
- **Figur 5**: eine Draufsicht auf das Nullpunkt-Spannsystem der in Figur 1 gezeigten Spanneinrichtung;
- **Figur 6**: eine Schnittansicht entlang der Linie A-A von Figur 5;
- **Figur 7**: eine Schnittansicht entlang der Linie B-B von Figur 5;
- **Figur 8**: ein Schaltschema zur Ansteuerung des Nullpunkt-Spannsystems und
- **Figur 9**: die Spanneinrichtung mit einer Sensorik zur Überwachung des Schaltzustands des Nullpunkt-Spannsystems.

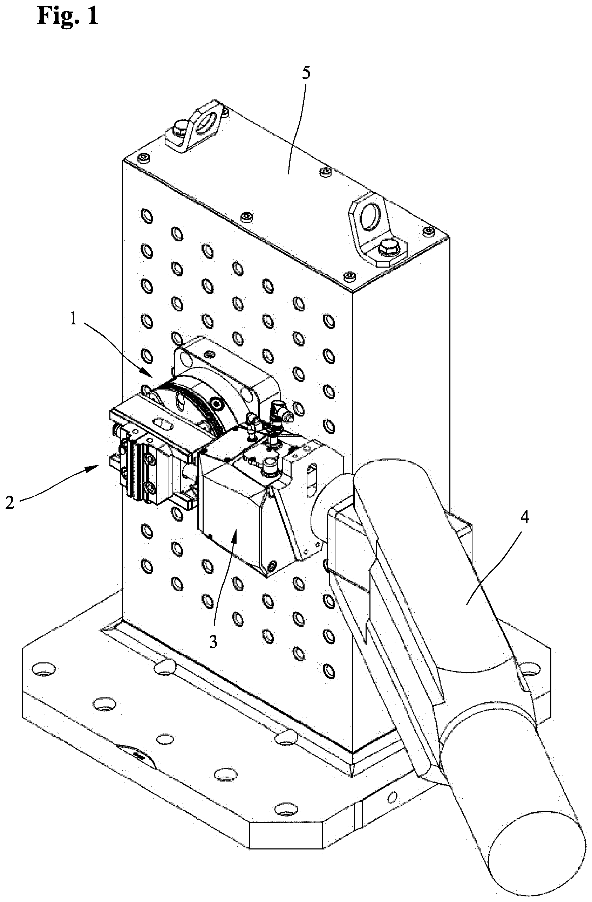

In Figur 1 ist eine zum Spannen von Werkstücken für deren Bearbeitung konzipierte Spanneinrichtung mit einem Nullpunkt-Spannsystem 1, einem mit dem Nullpunkt-Spannsystem 1 koppelbaren Maschinenschraubstock 2 und einer mit dem Maschinenschraubstock 2 lösbar verbindbaren Greif- und Positioniereinrichtung 3 zum Transport und zur Positionierung des Maschinenschraubstocks 2 an dem Nullpunkt-Spannsystem 1 gezeigt. Die Greif- und Positioniereinrichtung 3 kann mit dem Maschinenschraubstock 2 zu dessen Transport zwischen unterschiedlichen Positionen gekoppelt werden. Bei dem gezeigten Ausführungsbeispiel ist die mit dem Maschinenschraubstock 2 koppelbare Greif- und Positioniereinrichtung 3 an einem in mehreren Achsen beweglichen Tragarm 4 eines als Gelenkarmroboter ausgeführten Roboters montiert. Die Greif- und Positioniereinrichtung 3 kann aber auch an einem Portalroboter oder einem anders aufgebauten Transport- bzw. Positioniersystem zur Bewegung des Maschinenschraubstocks 2 in verschiedenen Richtungen angeordnet sein. In der gezeigten Ausführung ist das Nullpunkt-Spannsystem 1 als gesonderte Baugruppe ausgeführt, die an einem Aufspanntisch oder einem hier vertikal ausgerichteten Aufspannträger 5 befestigt werden kann. Das Nullpunkt-Spannsystem 1 kann aber auch in einem Aufspann- oder Werkstücktisch einer Bearbeitungsmaschine integriert sein.

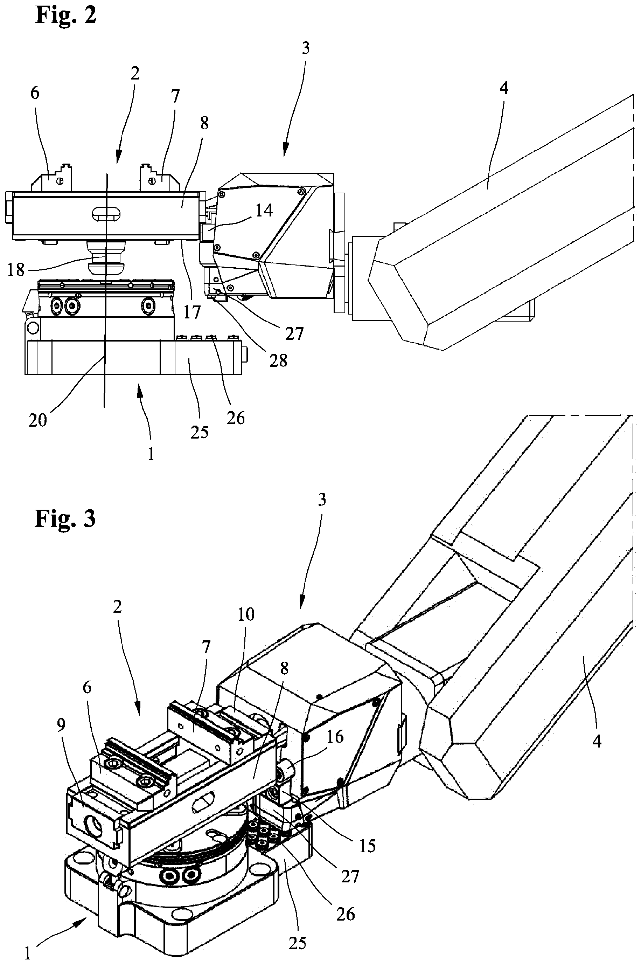

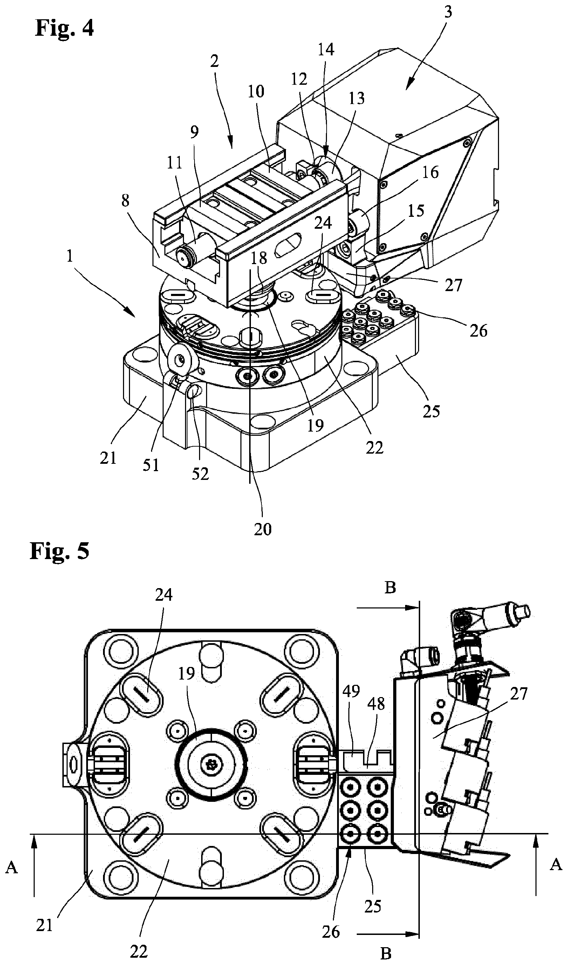

Der in den Figuren 2 bis 4 näher dargestellte Maschinenschraubstock 2 ist als Zentrisch-Schraubstock mit zwei gegeneinander verstellbaren Spannbacken 6 und 7 ausgeführt. Er kann aber auch eine feste und eine demgegenüber bewegliche Spannbacke aufweisen oder als Mehrfachspanner mit mehr als zwei Spannbacken ausgeführt sein. Im gezeigten Ausführungsbeispiel enthält der Maschinenschraubstock 2 einen Grundkörper 8, an dem die beiden Spannbacken 6 und 7 über in Figur 4 erkennbare Schieber 9 und 10 verschiebbar geführt und durch einen Verstellmechanismus mit einem hier als Verstellspindel ausgebildeten Verstellelement 11 gegenläufig verstellbar sind.

Wie aus Figur 4 hervorgeht, weist das als Verstellspindel ausgebildete Verstellelement 11 an seinem freien Ende ein z.B. als Außensechskant ausgebildetes Kupplungsprofil 12 zur Kopplung mit einem entsprechenden Kupplungsstück 13 eines in der Greif- und Positioniereinrichtung 3 integrierten Antriebs 14 auf. Die Greif- und Positioniereinrichtung 3 enthält an ihrer Frontseite außerdem eine Kopplungseinheit 15 zur formschlüssigen Kupplung mit dem Grundkörper 8 des Maschinenschraubstocks 2. Über die Kopplungseinheit 15 kann der Maschinenschraubstock 2 von der Greif- und Positioniereinrichtung 3 gegriffen und zu einer gewünschten Position transportiert werden. Die Kopplungseinheit 15 ist derart ausgeführt, dass sie den Maschinenschraubstock 2 nicht nur greifen, sondern während eines Transports auch sicher halten und somit z.B. auch in beliebigen Stellungen sicher zu dem Nullpunkt-Spannsystem 1 transportieren kann. An der Frontseite der Greif- und Positioniereinrichtung 3 sind außerdem ein RFID Schreib-/Lesekopf 16 und diverse Sensoren zur Überwachung der Verriegelung, zur Erfassung des Abstands und zur Anwesenheitskontrolle des Maschinenschraubstocks 2 angeordnet.

Durch den in der Greif- und Positioniereinrichtung 3 integrierten Drehantrieb 14 kann das als Verstellspindel ausgeführte Verstellelement 11 zur gegenseitigen Verstellung der beiden Spannbacken 6 und 7 gedreht werden. Somit kann der Maschinenschraubstock 2 über die Greif- und Positioniereinrichtung 3 nicht nur transportiert, sondern auch gespannt bzw. gelöst werden. Dadurch kann der Maschinenschraubstock 2 nicht nur zum Spannen während einer Bearbeitung, sondern auch zum Greifen eines Werkstücks für den Transport vor der Bearbeitung eingesetzt werden. Anstelle des als Außensechskant ausgebildeten Kupplungsprofils 13 können auch andere Kupplungslösungen, wie z.B. Keilwellen, Klauenaufsätze, 4-Kant-Verbindungen oder Wellen mit Zapfenaufsätzen verwendet werden. Der Drehantrieb 14 ist derart ausgeführt, dass er beim Ankoppeln der Greif- und Positioniereinrichtung 3 an dem Maschinenschraubstock 2 mit dem als Verstellspindel ausgeführten Verstellelement 11 gekuppelt wird. Ein möglicher Aufbau der Greif- und Positioniereinrichtung zum Transport und zur Betätigung des Maschinenschraubstocks 2 ist in der DE 10 2018 106 210 A1 offenbart. Auf deren Offenbarungsgehalt wird bezüglich des Aufbaus und der Funktionsweise der Greif- und Positioniereinrichtung ausdrücklich Bezug genommen.

An dem Grundkörper 8 des Maschinenschraubstocks 2 ist ein von dessen Unterseite 17 rechtwinklig vorstehendes Nullpunkt-Spannelement 18 zum verriegelbaren Eingriff in eine in den Figuren 4 und 5 gezeigte Aufnahmeöffnung 19 des Nullpunkt-Spannsystems 1 vorgesehen. Über das hier als Spannzapfen ausgeführte Nullpunkt-Spannelement 18 kann der Maschinenschraubstock 2 zentriert und positionsgenau auf einen mit einem entsprechenden Nullpunkt-Spannsystems 1 versehenen Maschinentisch einer Bearbeitungsmaschine gesetzt und durch eine geeignete Spannvorrichtung gespannt werden. Hierzu wird der Maschinenschraubstock 2 von der Greif- und Positioniereinrichtung 3 so bewegt, dass sich das hier als einzelner Spannzapfen ausgebildete Nullpunkt-Spannelement 18 entlang einer Längsachse 20 der Aufnahmeöffnung 19 im Nullpunkt-Spannsystem 1 bewegt und in die Aufnahmeöffnung 19 im Nullpunkt-Spannsystem 1 zum anschließenden Spannen eingreift. Bei der gezeigten Ausführung ist an dem Maschinenschraubstock 2 lediglich ein als Spannzapfen ausgeführtes Nullpunkt-Spannelement 18 angeordnet. An dem Maschinenschraubstock 2 können aber auch mehrere als Zentrier- und Spannelemente wirkende Nullpunkt-Spannelemente zum Eingriff in entsprechende Aufnahmeöffnungen eines Nullpunkt-Spannsystems vorgesehen sein.

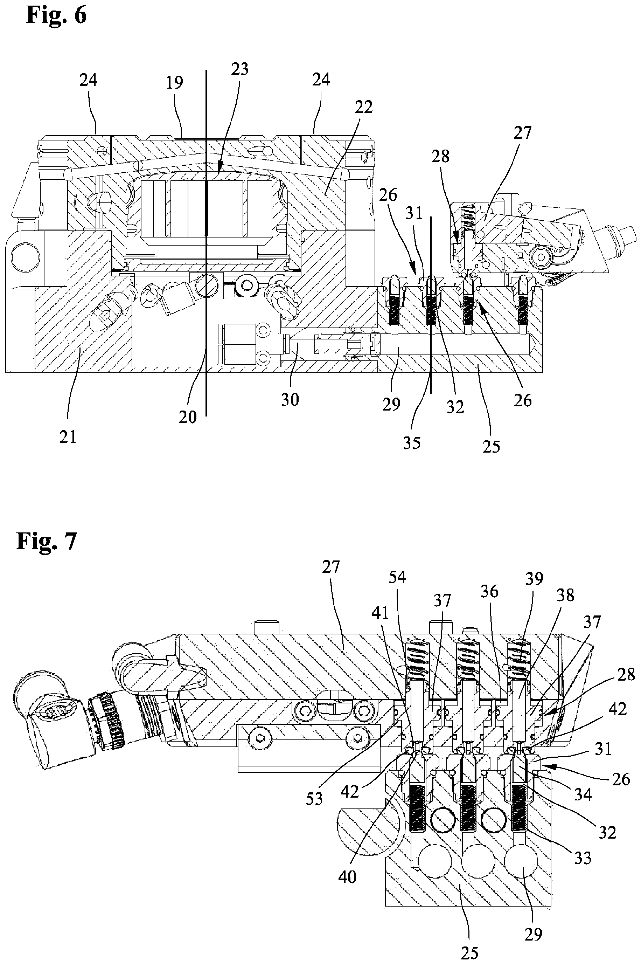

Das in der gezeigten Ausführung als separates Nullpunktspannmodul ausgebildete Nullpunkt-Spannsystem 1 enthält ein auf einer Grundplatte 21 angeordnetes topfförmiges Gehäuse 22, in dem die Aufnahmeöffnung 19 für das Nullpunkt-Spannelement 18 und eine in Figur 6 gezeigte Spanneinrichtung 23 zum Spannen des Maschinenschraubstocks 2 über das als Spannzapfen ausgeführte Nullpunkt-Spannelement 18 angeordnet sind. Das Gehäuse 22 weist an seiner Oberseite mehrere um die zentrale Aufnahmeöffnung 19 angeordnete Plananlageflächen 24 zur Auflage des Maschinenschraubstocks 2 auf. An dem Nullpunkt-Spannsystem 1 ist außerdem eine blockförmige Anschlusseinheit 25 mit mehreren parallel zu der Aufnahmeöffnung 19 angeordneten ersten Kupplungselementen 26 vorgesehen.

An der Greif- und Positioniereinrichtung 3 ist eine mit der Anschlusseinheit 25 koppelbare Andockeinrichtung 27 mit mehreren mit den Kupplungselementen 26 koppelbaren Andockelementen 28 zur Versorgung des Nullpunkt-Spannsystems 1 mit einem Arbeitsmedium angeordnet. Durch die Kupplungselemente 26 an dem Nullpunkt-Spannsystem 1 und die dazugehörigen Andockelemente 28 wird eine Schnittstelle geschaffen, über die eine Energiezuführung zum Nullpunkt-Spannsystem 1 auch ohne spezielle Vorkehrungen in einem Arbeitstisch erreicht werden kann. Im gezeigten Ausführungsbeispiel wird die Spanneinrichtung 23 pneumatisch betätigt, so dass das Nullpunkt-Spannsystem 1 mit Druckluft als Arbeitsmedium versorgt wird. Durch die über die Greif- und Positioniereinrichtung 3 in das Nullpunkt-Spannsystem 1 eingespeiste Druckluft kann nicht nur die Spanneinrichtung 23 betätigt, sondern die Druckluft kann auch als Blasluft zur Beseitigung von Spänen oder eventueller anderer Verunreinigungen verwendet werden. Bei hydraulischen oder elektrischen Spannsystemen können bei entsprechender Ausgestaltung der Kupplungselemente dem Nullpunkt-Spannsystem über die Greif- und Positioniereinrichtung aber auch ein Hydraulikfluid oder elektrischer Strom als Arbeitsmedium zugeführt werden.

Die Spannvorrichtung 23 kann derart ausgelegt sein, dass sie durch Federvorspannung geschlossen wird und durch Druckluft geöffnet werden kann. Durch die dem Nullpunkt-Spannsystem 1 zugeführte Druckluft kann die Spannvorrichtung 23 aber nicht nur geöffnet werden, sondern die Druckluft kann auch dazu dienen, die durch die Federvorspannung erzeugte Spannkraft zu verstärken. Darüber hinaus können durch die Druckluft auch Abblas- oder Reinigungsfunktionen realisiert werden. Auch durch Sensoren und Staudruckabfragen realisierte Kontrollfunktionen sind über die Druckluft möglich.

In der gezeigten Ausführung sind an der Anschlusseinheit 25 des Nullpunkt-Spannsystems 1 mehrere Reihen von nebeneinander angeordneten Kupplungselementen 26 vorgesehen. Auch die Andockeinrichtung 27 der Greif- und Positioniereinrichtung 3 weist mehrere nebeneinander angeordnete Andockelemente 28 zur Kopplung mit den korrespondierenden Kupplungselementen 26 jeweils einer Reihe auf. Dadurch können auch Maschinenschraubstöcke 2 mit unterschiedlichen Längen angekoppelt werden. Die in der Anschlusseinheit 25 angeordneten Kupplungselemente 26 sind über Kanäle 29 und Leitungen 30 mit der Spanneinrichtung 23 verbunden. Die in der Andockeinrichtung 27 angeordneten Andockelemente 28 werden über einen geeigneten Anschluss mit Druckluft versorgt. Bei der gezeigten Ausführung sind an dem Nullpunkt-Spannsystem 1 vier voneinander beabstandete Reihen mit jeweils drei nebeneinander angeordneten Kupplungselementen 26 und an der Andockeinrichtung 27 der Greif- und Positioniereinrichtung 3 drei nebeneinander angeordnete Andockelemente 28 zur Kopplung mit den Kupplungselementen 26 jeweils einer Reihe vorgesehen. Je nach Anforderung sind auch andere Raster oder Teilungen möglich.

Wie besonders aus Figur 7 hervorgeht, weisen die in der Anschlusseinheit 25 des Nullpunkt-Spannsystems 1 angeordneten Kupplungselemente 26 ein in die Anschlusseinheit 25 eingeschraubtes buchsenförmiges Anschlussteil 31 mit einer Durchgangsöffnung 32 und einem in der Durchgangsöffnung 32 beweglich angeordneten und durch eine Druckfeder 33 in eine Schließrichtung vorgespannten Sperrelement 34 auf. In der gezeigten Ausführung ist das Sperrelement 34 als Sperrstift ausgeführt. Die Kupplungselemente 26 sind gemäß Figur 6 derart angeordnet, dass die Längsachsen 35 der Durchgangsöffnungen 32 in den Anschlussteilen 31 parallel zur Längsachse 20 der Aufnahmeöffnung 19 für das Spannelement 18 verlaufen.

In Figur 7 ist auch erkennbar, dass die in der Andockeinrichtung 27 angeordneten Andockelemente 28 einen in einer Aufnahmeöffnung 36 axial verschiebbaren Druckstößel 37 enthalten. Der Druckstößel 37 weist eine Durchgangsöffnung 38 auf und wird durch eine Feder 39 nach außen gedrückt. Die Druckstößel 37 der Andockelemente 28 sind derart angeordnet, dass deren Durchgangsöffnungen 38 mit den dazugehörigen Durchgangsöffnungen 32 der Kupplungselemente 26 fluchten, wenn die Greif- und Positioniereinrichtung 3 eine Andockposition zum Andocken des Maschinenschraubstocks 2 an das Nullpunkt-Spannsystem 1 einnimmt. Dadurch werden die Kupplungselemente 26 und die Andockelemente 28 zur Druckluftversorgung des Nullpunkt-Spannsystems 1 miteinander gekoppelt, wenn das als Spannzapfen ausgeführte Nullpunkt-Spannelement 17 am Maschinenschraubstock 2 in die Aufnahmeöffnung 19 des Nullpunkt-Spannsystems 1 eingefahren wird. Es sind keine gesonderten Antriebe für die Kopplung der Druckluftversorgung erforderlich.

An ihrem dem Kupplungselement 26 zugewandten äußeren Ende weisen die Druckstößel 37 eine zentrales Druckteil 40 zum Öffnen des stiftförmigen Sperrelements 34 und einen düsenartigen Durchgang 41 für die Durchleitung der Druckluft von der Durchgangsöffnung 38 im Druckstößel 37 zur Durchgangsöffnung 32 im Anschlussteil 31. An dem äußeren Ende des Druckstößels 37 ist eine Dichtung 42 zur angedichteten Verbindung des Druckstößels 37 mit dem Anschlussteil 31 des Kupplungselements 26 angeordnet.

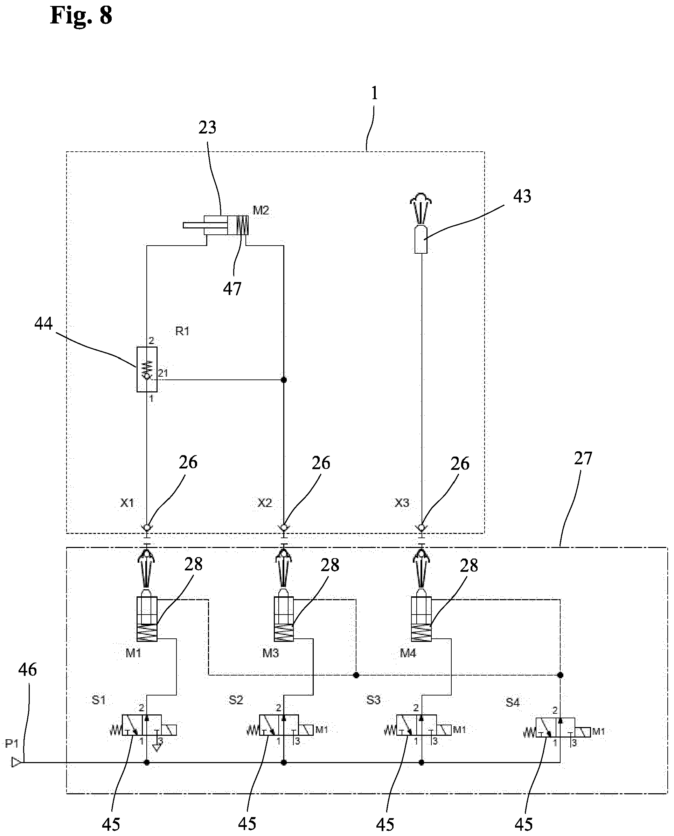

In Figur 8 ist ein Schaltschema zur pneumatischen Ansteuerung des Nullpunkt-Spannsystems 1 über die Andockeinrichtung 27 gezeigt. In diesem Schaltschema sind an dem Nullpunkt-Spannsystem 1 die mit M2 gekennzeichnete Spanneinrichtung 23, eine schematisch gezeigte Blaseinrichtung 43 zum Ablasen von Spänen oder anderen Verunreinigungen, ein Selbsthaltungsventil 44 und drei mit X1 bis X3 bezeichnete Kupplungselemente 26 gezeigt. An der Andockeinrichtung 27 sind drei mit M1, M3 und M4 bezeichnete Andockelemente 28 und vier mit S1 bis S4 gekennzeichnete Schaltventile 45 gezeigt. An der Andockeinrichtung 27 ist außerdem ein mit P1 bezeichneter Druckanschluss 46 für die Versorgung der Andockeinrichtung 27 mit Druckluft vorgesehen.

Über das mit X1 gekennzeichnete erste Kupplungselement 26 ist die Spanneinrichtung 23 in eine Lösestellung betätigbar. Über das mit X2 bezeichnete zweite Kupplungselement 26 kann die Spannkraft der durch eine Feder 45 in Spannstellung beaufschlagten Spanneinrichtung 23 erhöht werden. Über das mit X3 bezeichnete dritte Kupplungselement 26 kann die Blaseinrichtung 43 zum Ablasen von Spänen oder anderen Verunreinigungen versorgt werden. Wenn die Andockeinrichtung 27 mit dem Nullpunkt-Spannsystem 1 gekoppelt ist, kann die Spanneinrichtung 23 durch das mit S1 gekennzeichnete erste Schaltventil 45 in die Lösestellung bewegt werden. Durch das mit S2 gekennzeichnete zweite Schaltventil 45 kann dagegen die Spannkraft der durch die Feder 47 in Spannstellung beaufschlagten Spanneinrichtung 23 erhöht werden. Durch das der Spanneinrichtung 23 vorgeschaltete Selbsthaltungsventil 44 kann sichergestellt werden, dass die Spanneinrichtung 23 beim Entladen geöffnet bleibt und erst dann schließt, wenn der Gegendruck aktiv angesteuert wird. Durch das mit S3 bezeichnete dritte Schaltventil 45 kann die Ansteuerung der Blaseinrichtung 43 erfolgen. Über das mit S4 bezeichnete vierte Schaltventil 45 können die Druckstößel 37 der Andockelemente 28 eingefahren werden, um die Abkopplung der Greif- und Positioniereinrichtung 3 zu erleichtern.

Mit der vorstehend beschriebenen Spanneinrichtung kann ein Maschinenschraubstock 2 über die Greif- und Positioniereinrichtung 3 von einer Bereitstellungsstation zu dem an einem Aufspannträger 5 befestigten Nullpunkt-Spannsystem 1 transportiert und dort zur Bearbeitung gespannt werden, wie dies in Figur 1 gezeigt ist. Die im Nullpunkt-Spannsystem 1 angeordnete Spanneinrichtung 23 ist so konzipiert, dass sie durch Federkraft spannt und durch Ansteuerung mit Druckluft gelöst bzw. deren Spannkraft erhöht werden kann. In dem Nullpunkt-Spannsystem 1 ist dabei das Selbsthaltungsventil 44 integriert, welches die Spanneinrichtung 23 so lange offenhält, bis durch die Druckluft ein aktiver Gegendruck eingesteuert wird. In das Nullpunkt-Spannsystem 1 muss dadurch erst Druckluft eingeleitet werden, wenn der durch die Greif- und Positioniereinrichtung 3 transportierte Maschinenschraubstock 2 mit seinem zapfenförmigen Nullpunkt-Spannelement 18 in die zugehörige Aufnahmeöffnung 19 des Nullpunkt-Spannsystems 1 eingefahren ist. Durch das zapfenförmige Nullpunkt-Spannelement 18 wird dabei die positionsgenaue Lage des Maschinenschraubstocks 2 vorgegeben. Um Beschädigungen zu vermeiden kann der Spann- und Lösezustand der Spanneinrichtung 23 durch eine geeignete Sensorik erfasst werden. Dadurch kann verhindert werden, dass der Maschinenschraubstock 2 durch die Greif- und Positioniereinrichtung 3 bei geschlossener Spanneinrichtung 23 mit dem Nullpunkt-Spannsystem 1 gekoppelt oder von diesem entnommen wird.

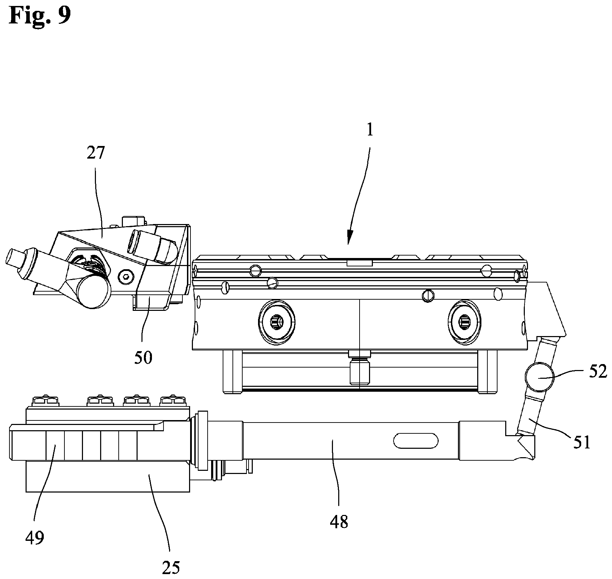

Die Überwachung des Schaltzustands des Nullpunkt-Spannsystems 1 kann z.B. über eine in Figur 9 gezeigte Sensorik erfolgen. Die Sensorik weist eine mit der Spanneinrichtung 23 im Nullpunkt-Spannsystem gekoppelte Schubstange 48 mit Schaltfahnen 49 und einen an der Andockeinrichtung 27 angeordneten Sensor 50 auf. Die Schaltfahnen 49 können mit dem Abstandsmaß der verschiedenen Schraubstöcke angebracht sein, so dass für alle möglichen Schraubstöcke eine Schaltfahne 49 für die Überwachung zur Verfügung steht. Die Schubstange 48 ist über eine mit einem Übertragungshebel 51 und einem Gelenk 52 versehene Gelenkanordnung mit der im Nullpunkt-Spannsystem 1 integrierten Spanneinrichtung 23 verbunden. Dadurch kann die Bewegung des Spanneinrichtung 23 verstärkt werden. Der Sensor 50 kann zweckmäßigerweise ein Lasersensor sein. Die Überwachung kann aber auch durch Ultraschall- oder Radarsensoren bzw. andere induktive, kapazitive oder ähnliche Sensoren erfolgen. Die Signale der Sensoren können auch z.B. über Bluetooth oder dgl. drahtlos von dem Nullpunkt-Spannsystem 1 zu der Andockeinrichtung 27 für die Steuerung der Druckluft übertragen werden.

Beim Beladen des Nullpunkt-Spannsystems 1 mit einem Maschinenschraubstock 2 werden die in Figur 7 gezeigten Druckstößel 37 durch die Federn 39 nach unten gedrückt. Sobald der zapfenförmige Nullpunkt-Spannelement 18 korrekt in die Aufnahmeöffnung 19 eingerückt ist und der Maschinenschraubstock 2 auf den Planflächen 24 aufliegt, kontaktieren die Druckstößel 37 die Anschlussteile 31 der am Nullpunkt-Spannsystem 1 angeordneten Kupplungselemente 26. Durch die Schaltventile 45 kann dann die Druckluftzufuhr zum Nullpunkt-Spannsystem 1 gesteuert und die Spanneinrichtung 23 zum Spannen betätigt werden.

Nach dem Spannen des Maschinenschraubstocks 2 am Nullpunkt-Spannsystem 1 kann die Greif- und Positioniereinrichtung 3 von dem Maschinenschraubstock 2 entkoppelt werden, wobei hier die Druckluft noch in vorteilhafter Weise genutzt werden kann, um die Druckstößel 37 ebenfalls zurückzuziehen und dadurch Freiraum für die seitliche Wehfahrbewegung der Greif- und Positioniereinheit 3 zu schaffen. Hierzu können die in Figur 7 gezeigten Druckstößel 37 eine durch Öffnen des Schaltventils S4 mit Druckluft beaufschlagbare erste Druckfläche 53 zur Bewegung des Druckstößels 37 in eine zurückgezogene Stellung enthalten. Die Druckstößel 37 sind in der gezeigten Ausführung als Differenzdruckstößel ausgebildet, die neben der ringförmigen ersten Druckfläche 53 eine durch die Druckluft beaufschlagbare, gegenüber der ersten Druckfläche 53 kleinere zweite Druckfläche 54 aufweisen. Dadurch können die Druckstößel 37 über die Druckluft nicht nur zurückgezogen, sondern auch gegen die Kupplungselemente 26 gedrückt werden.

Zur Entnahme des Maschinenschraubstocks 2 von dem Nullpunkt-Spannsystem 1 wird die Greif- und Positioniereinrichtung 3 mit der Andockeinrichtung 27 an den entsprechenden Kupplungselementen 26 des Nullpunkt-Spannsystems 1 positioniert. Das mit S4 bezeichnete vierte Schaltventil 45 wird geschlossen, so dass die Druckstößel 37 der Andockelemente 28 ausgefahren sind und in Kontakt mit den Kupplungselementen 26 des Nullpunkt-Spannsystem 1 gelangen können. Durch entsprechende Betätigung des mit S1 bezeichneten ersten Schaltventils 45 kann dann die Spanneinrichtung 23 zur Öffnung angesteuert werden. Das Öffnen der Spanneinrichtung 23 wird durch eine entsprechende Sensorik detektiert. Über das Selbsthaltungsventil 44 wird der Öffnungsdruck innerhalb des Nullpunkt-Spannsystems 1 solange aufrechterhalten, bis das als Rückschlagventil ausgeführte Selbsthalteventil 44 geöffnet wird und die Spanneinrichtung 23 schließen kann.

### Bezugszeichenliste

- 1: Nullpunkt-Spannsystem
- 2: Maschinenschraubstock
- 3: Greif- und Positioniereinrichtung
- 4: Tragarm
- 5: Aufspannträger
- 6: Spannbacke
- 7: Spannbacke
- 8: Grundkörper
- 9: Schieber
- 10: Schieber
- 11: Verstellelement
- 12: Kupplungsprofil
- 13: Kupplungsstück
- 14: Drehantrieb
- 15: Kopplungseinheit
- 16: RFID Schreib-/Lesekopf
- 17: Unterseite
- 18: Nullpunkt-Spannelement
- 19: Aufnahmeöffnung
- 20: Längsachse
- 21: Grundplatte
- 22: Gehäuse
- 23: Spanneinrichtung
- 24: Plananlagefläche
- 25: Anschlusseinheit
- 26: Kupplungselement
- 27: Andockeinrichtung
- 28: Andockelement
- 29: Kanal
- 30: Leitung
- 31: Anschlussteil
- 32: Durchgangsöffnung
- 33: Druckfeder
- 34: Sperrelement
- 35: Längsachse
- 36: Aufnahmebohrung
- 37: Druckstößel
- 38: Durchgangsöffnung
- 39: Feder
- 40: Druckstück
- 41: Durchgang
- 42: Dichtung
- 43: Blaseinrichtung
- 44: Selbsthaltungsventil
- 45: Schaltventil
- 46: Druckanschluss
- 47: Feder
- 48: Schubstange
- 49: Schaltfahne
- 50: Sensor
- 51: Übertragungshebel
- 52: Gelenk
- 53: Erste Druckfläche
- 54: Zweite Druckfläche

## Patentansprüche

1. Spanneinrichtung mit einem durch ein Arbeitsmedium betätigbaren Nullpunkt-Spannsystem (1), einem mit dem Nullpunkt-Spannsystem (1) koppelbaren Maschinenschraubstock (2) und einer Greif- und Positioniereinrichtung (3) zum Transport und zur Positionierung des Maschinenschraubstocks (2) an dem Nullpunkt-Spannsystem (1), wobei das Nullpunkt-Spannsystem (1) mindestens ein Kupplungselement (26) und die Greif- und Positioniereinrichtung (3) eine Andockeinrichtung (27) mit mindestens einem mit dem Kupplungselement (26) koppelbaren Andockelement (28) für die Zuführung des Arbeitsmediums zum Nullpunkt-Spannsystem (1) enthält, **dadurch gekennzeichnet, dass** das mindestens eine Kupplungselement (26) am Nullpunkt-Spannsystem (1) parallel versetzt zu einer Aufnahmeöffnung (19) für ein am Maschinenschraubstock (2) angeordnetes Spannelement (18) und das mindestens eine Andockelement (28) derart angeordnet ist, dass es mit dem Kupplungselement (26) durch eine Einfahrbewegung des am Maschinenschraubstock (2) angeordneten Spannelements (18) in die Aufnahmeöffnung (19) gekoppelt wird.

2. Spanneinrichtung nach Anspruch 1, **dadurch gekennzeichnet, dass** das mindestens eine Kupplungselement (26) eine Durchgangsöffnung (32) aufweist, deren Längsachse (35) parallel zu einer Längsachse (20) der Aufnahmeöffnung (19) für das Spannelement (18) verläuft.

3. Spanneinrichtung nach Anspruch 1 oder 2, **dadurch gekennzeichnet, dass** das mindestens eine Andockelement (28) einen in einer Aufnahmeöffnung (36) der Andockeinrichtung (27) axial verschiebbaren und mit einer Durchgangsöffnung (38) versehenen Druckstößel (37) umfasst.

4. Spanneinrichtung nach Anspruch 3, **dadurch gekennzeichnet, dass** der Druckstößel (37) derart angeordnet ist, dass seine Durchgangsöffnung (38) mit der Durchgangsöffnung (32) des dazugehörigen Kupplungselements (26) fluchtet, wenn die Greif- und Positioniereinrichtung (3) eine Andockposition zum Andocken des Maschinenschraubstocks (2) an das Nullpunkt-Spannsystem (1) einnimmt.

5. Spanneinrichtung nach Anspruch 3 oder 4, **dadurch gekennzeichnet, dass** der Druckstößel (37) durch eine Druckfeder (33) nach außen gedrückt wird.

6. Spanneinrichtung nach einem der Ansprüche 3 bis 5, **dadurch gekennzeichnet, dass** der Druckstößel (37) an seinem dem Kupplungselement (26) zugewandten äußeren Ende ein zentrales Druckteil (40) zum Öffnen eines im Anschlussteil angeordneten Sperrelements (34) und einen Durchgang (41) für die Durchleitung der Druckluft von dem Andockelement (28) zu dem Kupplungselement (26) enthält.

7. Spanneinrichtung nach Anspruch 6, **dadurch gekennzeichnet, dass** das Sperrelement (34) ein innerhalb des Kupplungselements (26) verschiebbar geführter und durch eine Druckfeder (33) in eine Schließstellung beaufschlagter Sperrstift ist.

8. Spanneinrichtung nach einem der Ansprüche 3 bis 7, **dadurch gekennzeichnet, dass** der Druckstößel (37) eine durch das Arbeitsmedium beaufschlagbare erste Druckfläche (53) zur Bewegung des Druckstößels (37) in eine zurückgezogene Stellung enthält.

9. Spanneinrichtung nach 8, **dadurch gekennzeichnet, dass** der Druckstößel (37) als Differenzdruckstößel ausgebildet ist, der neben der durch das Arbeitsmedium beaufschlagbaren ersten Druckfläche (53) zur Bewegung des Druckstößels (37) in eine zurückgezogene Stellung eine durch das Arbeitsmedium beaufschlagbare zweite Druckfläche (54) zur Beaufschlagung des Druckstößels (37) in eine ausgefahrene Stellung enthält..

10. Spanneinrichtung nach einem der Ansprüche 1 bis 9, **dadurch gekennzeichnet, dass** in der Andockeinrichtung (27) mehrere Schaltventile (45) zur Steuerung der Druckluftzufuhr angeordnet sind.

11. Spanneinrichtung nach einem der Ansprüche 1 bis 10, **dadurch gekennzeichnet, dass** in dem Nullpunkt-Spannsystem (1) ein Selbsthaltungsventil (44) zur Halterung des Nullpunkt-Spannsystems (1) in einer Öffnungsstellung bei fehlender Ansteuerung in eine Schließstellung angeordnet ist.

12. Spanneinrichtung nach einem der Ansprüche 1 bis 11, **dadurch gekennzeichnet, dass** an dem Nullpunkt-Spannsystem (1) mehrere Reihen von nebeneinander angeordneten Kupplungselementen (26) und an der Greif- und Positioniereinrichtung (3) mehrere nebeneinander angeordnete Andockelemente (28) zur Kopplung mit den korrespondierenden Kupplungselementen (26) jeweils einer Reihe angeordnet sind.

13. Spanneinrichtung nach einem der Ansprüche 1 bis 12, **dadurch gekennzeichnet, dass** die Greif- und Positioniereinrichtung (3) einen integrierten Antrieb (13) zur Bewegung der Spannvorrichtung (1) zwischen einer Spann- und Lösestellung enthält.

14. Spanneinrichtung nach einem der Ansprüche 1 bis 13, **dadurch gekennzeichnet, dass** dem Nullpunkt-Spannsystem (1) eine Sensorik (49, 50) zur Überwachung des Schaltzustands des Nullpunk-Spannsystems (1) zugeordnet ist.

15. Spanneinrichtung nach Anspruch 14, **dadurch gekennzeichnet, dass** die Sensorik (49, 50) eine mit einer Spanneinrichtung (23) im Nullpunkt-Spannsystem (1) gekoppelte Schubstange (48) mit Schaltfahnen (49) und einen an der Andockeinrichtung (27) angeordneten Sensor (50) aufweist.

16. Spanneinrichtung nach Anspruch 15, **dadurch gekennzeichnet, dass** die Schubstange (48) über eine mit einem Übertragungshebel (51) und einem Gelenk (52) versehene Gelenkanordnung mit der Spanneinrichtung (23) im Nullpunkt-Spannsystem (1) verbunden ist.

## Claims

1. Clamping device having a zero-point clamping system (1) which can be actuated by a working medium, a machine vice (2) which can be coupled to the zero-point clamping system (1), and a gripping and positioning device (3) for transporting and positioning the machine vice (2) on the zero-point clamping system (1), wherein the zero-point clamping system (1) contains at least one coupling element (26) and the gripping and positioning device (3) contains a docking device (27) with at least one docking element (28), which can be coupled to the coupling element (26), for supplying the working medium to the zero-point clamping system (1), **characterized in that** the at least one coupling element (26) on the zero-point clamping system (1) is offset parallel to a receiving opening (19) for a clamping element (18) arranged on the machine vice (2) and the at least one docking element (28) is arranged in such a way that it is coupled to the coupling element (26) by a retracting movement of the clamping element (18) arranged on the machine vice (2) into the receiving opening (19).

2. Clamping device according to claim 1, **characterized in that** the at least one coupling element (26) has a through-opening (32), the longitudinal axis (35) of which runs parallel to a longitudinal axis (20) of the receiving opening (19) for the clamping element (18).

3. Clamping device according to claim 1 or 2, **characterized in that** the at least one docking element (28) comprises a pressure ram (37) axially displaceable in a receiving opening (36) of the docking device (27) and provided with a through-opening (38).

4. Clamping device according to claim 3, **characterized in that** the pressure ram (37) is arranged in such a way that its through-opening (38) is aligned with the through-opening (32) of the associated coupling element (26) when the gripping and positioning device (3) assumes a docking position for docking the machine vice (2) to the zero-point clamping system (1).

5. Clamping device according to claim 3 or 4, **characterized in that** the pressure ram (37) is pressed outwards by a compression spring (33).

6. Clamping device according to one of claims 3 to 5, **characterized in that** the pressure ram (37) contains, at its outer end facing the coupling element (26), a central pressure part (40) for opening a blocking element (34) arranged in the connection part and a passage (41) for the passage of the compressed air from the docking element (28) to the coupling element (26).

7. Clamping device according to claim 6, **characterized in that** the blocking element (34) is a blocking pin which is displaceably guided within the coupling element (26) and is urged into a closed position by a compression spring (33).

8. Clamping device according to one of claims 3 to 7, **characterized in that** the pressure ram (37) includes a first pressure surface (53) which can be acted upon by the working medium for moving the pressure ram (37) into a retracted position.

9. Clamping device according to claim 8, **characterized in that** the pressure ram (37) is designed as a differential pressure ram which, in addition to the first pressure surface (53) which can be acted upon by the working medium for moving the pressure ram (37) into a retracted position, contains a second pressure surface (54) which can be acted upon by the working medium for acting upon the pressure ram (37) into an extended position.

10. Clamping device according to one of claims 1 to 9, **characterized in that** a plurality of switching valves (45) for controlling the compressed air supply are arranged in the docking device (27).

11. Clamping device according to one of claims 1 to 10, **characterized in that** a self-retaining valve (44) is arranged in the zero-point clamping system (1) for holding the zero-point clamping system (1) in an open position in the absence of actuation in a closed position.

12. Clamping device according to one of claims 1 to 11, **characterized in that** a plurality of rows of coupling elements (26) arranged next to one another are arranged on the zero-point clamping system (1) and a plurality of docking elements (28) arranged next to one another are arranged on the gripping and positioning device (3) for coupling with the corresponding coupling elements (26) of one row in each case.

13. Clamping device according to one of claims 1 to 12, **characterized in that** the gripping and positioning device (3) contains an integrated drive (13) for moving the clamping device (1) between a clamping position and a release position.

14. Clamping device according to one of claims 1 to 13, **characterized in that** a sensory system (49, 50) for monitoring the switching state of the zero-point clamping system (1) is assigned to the zero-point clamping system (1).

15. Clamping device according to claim 14, **characterized in that** the sensory system (49, 50) comprises a push rod (48) with switching flags (49) coupled to a clamping device (23) in the zero-point clamping system (1) and a sensor (50) arranged on the docking device (27).

16. Clamping device according to claim 15, **characterized in that** the push rod (48) is connected to the clamping device (23) in the zero-point clamping system (1) via a joint arrangement provided with a transfer lever (51) and a joint (52).

## Revendications

1. Dispositif de serrage avec un système de serrage à point zéro (1) pouvant être actionné par un milieu de travail, un étau de machine (2) pouvant être accouplé au système de serrage à point zéro (1) et un dispositif de préhension et de positionnement (3) pour le transport et pour le positionnement de l'étau de machine (2) sur le système de serrage à point zéro (1), dans lequel le système de serrage à point zéro (1) contient au moins un élément d'accouplement (26) et le dispositif de préhension et de positionnement (3) un dispositif d'amarrage (27) avec au moins un élément d'amarrage (28) pouvant être accouplé à l'élément d'accouplement (26) pour l'amenée du milieu de travail au système de serrage à point zéro (1), **caractérisé en ce que** le au moins un élément d'accouplement (26) est disposé sur le système de serrage à point zéro (1) de manière décalée parallèlement d'une ouverture de réception (19) pour un élément de serrage (18) disposé sur l'étau de machine (2) et le au moins un élément d'amarrage (28) est disposé de telle sorte qu'il est accouplé à l'élément d'accouplement (26) par un mouvement d'insertion de l'élément de serrage (18) disposé sur l'étau de machine (2) dans l'ouverture de réception (19).

2. Dispositif de serrage selon la revendication 1, **caractérisé en ce que** le au moins un élément d'accouplement (26) présente une ouverture de passage (32), dont l'axe longitudinal (35) s'étend parallèlement à un axe longitudinal (20) de l'ouverture de réception (19) pour l'élément de serrage (18).

3. Dispositif de serrage selon la revendication 1 ou 2, **caractérisé en ce que** le au moins un élément d'amarrage (28) comprend un poussoir (37) coulissant axialement dans une ouverture de réception (36) du dispositif d'amarrage (27) et pourvu d'une ouverture de passage (38).

4. Dispositif de serrage selon la revendication 3, **caractérisé en ce que** le poussoir (37) est disposé de telle sorte que son ouverture de passage (38) est en affleurement avec l'ouverture de passage (32) de l'élément d'accouplement (26) associé, lorsque le dispositif de préhension et de positionnement (3) occupe une position d'amarrage pour amarrer l'étau de machine (2) sur le système de serrage à point zéro (1) .

5. Dispositif de serrage selon la revendication 3 ou 4, **caractérisé en ce que** le poussoir (37) est pressé vers l'extérieur par un ressort de pression (33).

6. Dispositif de serrage selon l'une quelconque des revendications 3 à 5, **caractérisé en ce que** le poussoir (37) contient sur son extrémité extérieure tournée vers l'élément d'accouplement (26) une partie de pression centrale (40) pour ouvrir un élément de blocage (34) disposé dans la partie de raccordement et un passage (41) pour faire passer l'air comprimé à partir de l'élément d'amarrage (28) vers l'élément d'accouplement (26).

7. Dispositif de serrage selon la revendication 6, **caractérisé en ce que** l'élément de blocage (34) est une tige de blocage guidée de manière coulissante à l'intérieur de l'élément d'accouplement (26) et sollicitée dans une position de fermeture par un ressort de pression (33).

8. Dispositif de serrage selon l'une quelconque des revendications 3 à 7, **caractérisé en ce que** le poussoir (37) contient une première surface de pression (53) pouvant être sollicitée par le milieu de travail pour déplacer le poussoir (37) dans une position rentrée.

9. Dispositif de serrage selon la revendication 8, **caractérisé en ce que** le poussoir (37) est réalisé sous la forme d'un poussoir différentiel, qui contient en plus de la première surface de pression (53) pouvant être sollicitée par le milieu de travail pour le déplacement du poussoir (37) dans une position rentrée une deuxième surface de pression (54) pouvant être sollicitée par le milieu de travail pour solliciter le poussoir (37) dans une position sortie.

10. Dispositif de serrage selon l'une quelconque des revendications 1 à 9, **caractérisé en ce que** plusieurs soupapes de commutation (45) pour la commande de l'amenée d'air comprimé sont disposées dans le dispositif d'amarrage (27).

11. Dispositif de serrage selon l'une quelconque des revendications 1 à 10, **caractérisé en ce qu'**une soupape de maintien automatique (44) pour le maintien du système de serrage à point zéro (1) dans une position d'ouverture en l'absence d'une commande dans une position de fermeture est disposée dans le système de serrage à point zéro (1).

12. Dispositif de serrage selon l'une quelconque des revendications 1 à 11, **caractérisé en ce que** plusieurs rangées d'élément d'accouplement (26) disposés les uns à côté des autres et plusieurs éléments d'amarrage (28) disposés les uns à côté des autres sur le dispositif de préhension et de positionnement (3) pour l'accouplement aux éléments d'accouplement (26) correspondants respectivement d'une rangée sont disposées sur le système de serrage à point zéro (1).

13. Dispositif de serrage selon l'une quelconque des revendications 1 à 12, **caractérisé en ce que** le dispositif de préhension et de positionnement (3) contient un entraînement (13) intégré pour le déplacement du dispositif de serrage (1) entre une position de serrage et de desserrage.

14. Dispositif de serrage selon l'une quelconque des revendications 1 à 13, **caractérisé en ce qu'**un système de détection (49, 50) pour surveiller l'état de commutation du système de serrage à point zéro (1) est associé au système de serrage à point zéro (1).

15. Dispositif de serrage selon la revendication 14, **caractérisé en ce que** le système de détection (49, 50) présente une bielle (48) accouplée à un dispositif de serrage (23) dans le système de serrage à point zéro (1) avec des plaques de commutation (49) et un capteur (50) disposé sur le dispositif d'amarrage (27).

16. Dispositif de serrage selon la revendication 15, **caractérisé en ce que** la bielle (48) est reliée au dispositif de serrage (23) dans le système de serrage à point zéro (1) par l'intermédiaire d'un ensemble articulé pourvu d'un levier de transmission (51) et d'une articulation (52).
